# EUROPEAN PATENT APPLICATION

(11) **EP 2 503 499 A1**
(43) Date of publication of application: **26.09.2012**
(21) Application number: 12159679.5
(22) Date of filing: 15.03.2012
(51) Int. Cl.: G06Q 30/02

(54) **Systems and methods for generating a bill**

(30) Priority: 21.03.2011 US 201113052360
(71) Applicant: General Electric Company, Schenectady, NY 12345 (US)
(72) Inventor: Littrell, Nathan Bowman, Minden, NV 89423 (US)
(74) Representative: Picker, Madeline Margaret

(57) **Abstract**

A system (100) includes a first computer (118) configured to transmit a load control request to a device (104) associated with an energy consumer (106). The system also includes a second computer configured to receive a notification representative of an override of the load control request, and determine a penalty to be imposed upon the customer based on the notification received.

## Description

### BACKGROUND OF THE INVENTION

The present application relates generally to power systems and, more particularly, to systems and methods for generating a bill.

Demand for electricity by customers generally varies over the course of any particular day. Such demand also generally varies by season (e.g., demand for electricity may be higher during the hot summer months as compared to the demand in the more mild spring months). Such demand may also grow over time in a particular market as the population and/or industry grows. Increasing electricity generation capacity can be capital intensive and take many years of planning and construction.

Rather than undertake such significant capital investments, planning and construction, some utilities impose a rate structure that discourages use of electricity during peak demand periods. For example, a utility customer who subscribes to such a rate structure agrees to reduced energy consumption during such peak demand periods and in return, receives a favorable rate. In the context of a residential application, for example, this means that during peak demand periods, the utility may choose to not supply electricity to the residential hot water heater. The hot water heater is energized during off peak periods. Such rate structures also are available in commercial applications and may relate to many different types of equipment that consume energy.

Some electric utility companies utilize so-called "smart grid" or Advanced Metering Infrastructure (AMI) power networks. Using an AMI network, a utility company may communicate with individual loads within a customer's premises and selectively reduce energy supplied during peak usage periods. As such, the utility company may reduce energy supplied to low priority loads (e.g., a hot water heater), while maintaining energy supplied to high priority loads (e.g., a freezer).

In addition, some utilities employ a demand response system that facilitates managing energy supply during periods of reduced power generation capacity and/or reduced power distribution capacity. Such situations may develop, for example, in the event a power generation source is taken off the energy distribution grid for servicing. In such situations, the demand response systems transmit demand response requests to a dashboard or another device (e.g., a switch) associated with at least one load at a customer's premises. The demand response requests cause the connected loads to be taken off the grid (e.g., the switch is opened so that no energy is supplied to such loads) during the period of reduced power generation capacity and/or reduced power distribution capacity.

By managing energy consumption during such peak demand periods as well as periods of reduced power generation/distribution capacity as described above, a utility may avoid making the significant capital investments required to construct and operate additional power generation facilities. Over time, of course, new power generation facilities may be needed in the event demand continues to grow and exceed capacity. In addition, while some utility customers may be willing to subscribe to a rate structure that enables the utility to disconnect energy supply to certain appliances/equipment during peak periods, such rate structures are not necessarily satisfactory.

For example, in at least some known rate structures, a customer is given the opportunity to override demand response or load control requests, thus maintaining delivery of electricity at pre-existing levels. Such overrides, however, may frustrate a utility company's goal of reducing energy consumption and/or may cause the utility company to incur additional cost by purchasing additional energy to meet peak energy demand.

### BRIEF DESCRIPTION OF THE INVENTION

In one embodiment, a system is provided that includes a first computer configured to transmit a load control request to a device associated with an energy consumer. The system also includes a second computer configured to receive a notification representative of an override of the load control request, and determine a penalty to be imposed upon the customer based on the notification received.

In another embodiment, a system is provided that includes a meter for monitoring energy consumed by an energy consumer. The system also includes at least one computer configured to transmit a load control request to a device associated with the energy consumer. The at least one computer is also configured to receive a notification representative of an override of the load control request, and cause a bill to be generated for the energy consumed at least partially based on the notification received.

In yet another embodiment, a method for generating a bill is provided that includes receiving a measurement representative of energy consumed by an energy consumer and transmitting a load control request to a device associated with the energy consumer. A notification is received that is representative of an override of the load control request. A bill is generated for energy consumed based on the measurement and the notification received.

### BRIEF DESCRIPTION OF THE DRAWINGS

Fig. 1 is a block diagram of an example system for use with a utility company.
Fig. 2 is a block diagram of an example billing system that may be used with the system shown in Fig. 1.
Fig. 3 is a block diagram of an example billing algorithm that may be used with the billing system shown in Fig. 2.
Fig. 4 is a flow diagram of an example method of generating a bill.

### DETAILED DESCRIPTION OF EMBODIMENTS OF THE INVENTION

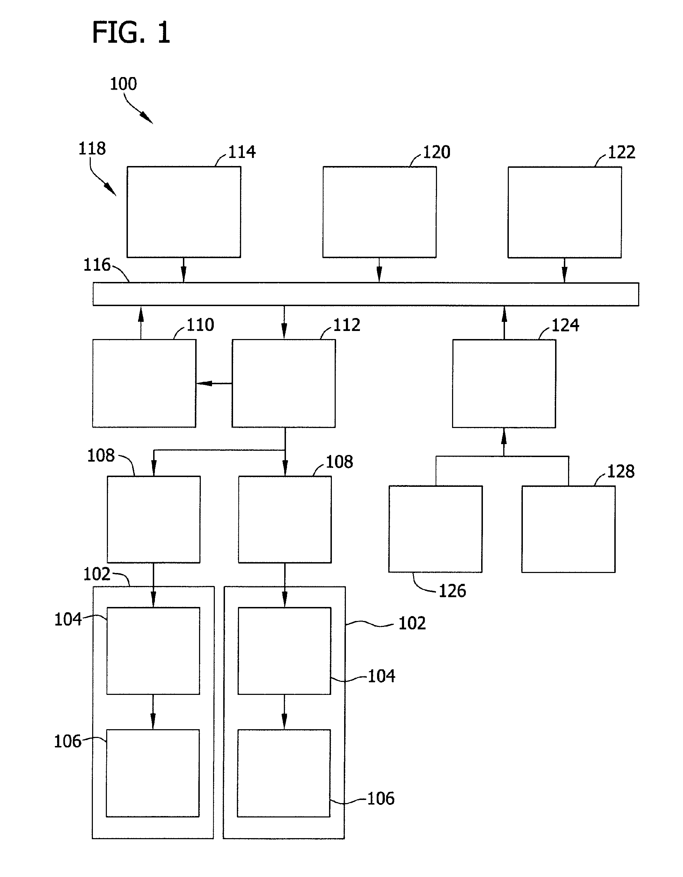

Fig. 1 illustrates an example system 100 that may be used with a utility company (not shown), such as an electric utility company. Moreover, in the example embodiment, the utility company provides energy, such as electricity, to a plurality of locations 102. Alternatively, energy provided by the utility company may include natural gas, propane, and/or any other form of energy and/or product usable for generating energy. Locations 102 may include, but are not limited to only including, a residence, an office building, an industrial facility, and/or any other building or location that receives energy from the utility company. In the example embodiment, system 100 monitors the delivery of energy from the utility company to locations 102.

In the example embodiment, each location 102 includes at least one network device 104 and at least one energy consumer 106 coupled to network device 104. As used herein, the term "couple" is not limited to a direct mechanical and/or electrical connection between components, but may also include an indirect mechanical and/or electrical connection between components. In the example embodiment, network device 104 includes a dashboard, a console, and/or any other device that enables system 100 to function as described herein. Alternatively, network device 104 may be a receiver or a transceiver coupled to or integrated within an associated energy consumer 106. Network device 104 transmits and receives data, such as energy management messages, between energy consumers 106 and one or more systems or components of the utility company. In the example embodiment, energy consumers 106 are devices or systems, such as appliances, machines, lighting systems, security systems, computers, and/or any other load that consumes energy received from the utility.

In the example embodiment, at least one AMI meter 108 is coupled to each network device 104 within or proximate to location 102. Moreover, in the example embodiment, AMI meter 108 is coupled to each energy consumer 106 within location 102 via network device 104. In an alternative embodiment, location 102 does not include a network device 104, and AMI meter 108 is coupled directly to energy consumers 106 of location 102. In the example embodiment, AMI meter 108 measures the energy consumed by each energy consumer 106 within location 102 and transmits data representative of the energy consumed (hereinafter referred to as "energy consumption measurements") to a meter monitoring system 110, as described more fully below. Moreover, in the example embodiment, AMI meters 108 are programmed to measure the energy consumed by each energy consumer 106 at a start of a billing period and at an end of the billing period and to store energy consumption measurements within a memory device (not shown) within each AMI meter 108. The billing period may be 30 days, a calendar month, and/or any other time period as desired. Moreover, in the example embodiment, AMI meters 108 are enabled to measure and store power measurements periodically, such as every hour, every 10 minutes, and/or at any other frequency. AMI meters 108 are also enabled to measure energy consumption upon a request (i.e., "on demand") that is initiated by a system coupled in signal communication with AMI meters 108. In the example embodiment, AMI meters 108 are programmed to automatically transmit the measurements to meter monitoring system 110.

Moreover, a plurality of AMI meters 108, in the example embodiment, are coupled to, and/or are a part of, an AMI system or network 112. Moreover, in the example embodiment, AMI system 112 is coupled to meter monitoring system 110. In the example embodiment, AMI system 112 includes a plurality of data and/or power conduits, such as network and/or power cables, that enable data to be transmitted and received between AMI meters 108 and meter monitoring system 110. Moreover, in the example embodiment, AMI system 112 includes at least one computer, such as a server, and/or at least one router or switch that enables data to be routed to identified destinations.

As used herein, the term "computer" refers to a system that includes at least one processor and at least one memory device. The processor may include any suitable programmable circuit including one or more systems and microcontrollers, microprocessors, reduced instruction set circuits (RISC), application specific integrated circuits (ASIC), programmable logic circuits (PLC), field programmable gate arrays (FPGA), and any other circuit capable of executing the functions described herein. The above represent examples only, and thus are not intended to limit in any way the definition and/or meaning of the term "processor." A computer may include a plurality of processors and/or memory devices, and may be, or may be included within, one or more servers, data centers, and/or any other centralized or distributed computing system. Moreover, in the example embodiment, the memory device includes a computer-readable medium, such as, without limitation, random access memory (RAM), flash memory, a hard disk drive, a solid state drive, a diskette, a flash drive, a compact disc, a digital video disc, and/or any suitable memory that enables the processor to store, retrieve, and/or execute instructions and/or data.

In one embodiment, AMI system 112 may be coupled to at least one legacy meter (not shown) instead of, or in addition to, AMI meter 108. As used herein, the term "legacy" refers to a meter or another device that does not include the capability of remotely communicating with and/or being remotely controlled by another device. In contrast, AMI meters 108, or "smart meters," are enabled to remotely communicate with and/or be remotely controlled by another device or system, such as meter monitoring system 110, a demand response system 114, and/or any other device or system that enables system 100 to function as described herein.

Meter monitoring system 110, in the example embodiment, includes at least one computer that is located at the utility company, such as within a data center (not shown) of the utility company. Alternatively, meter monitoring system 110 is located external to the utility company, and system 110 may be coupled in communication with a computer or other device (not shown) at the utility company. In the example embodiment, meter monitoring system 110 receives energy consumption measurements from AMI meters 108 and stores the energy consumption measurements on one or more data files (not shown) associated with each AMI meter 108.

System 100 also includes demand resp+onse system 114, in the example embodiment, that is coupled to meter monitoring system 110 via a system bus 116. In the example embodiment, system bus 116 at least partially forms an intranet or other network within the utility company that enables data to be transmitted and received securely between a plurality of computers 118. In the example embodiment, computers 118 include, or are included within, meter monitoring system 110, demand response system 114, a customer information system 120, and a billing system 122. Alternatively, computers 118 may include, or may be included within, any other system or systems that enables system 100 to function as described herein. In the example embodiment, computers 118 are housed within a data center (not shown) of the utility company. Alternatively, computers 118 may be housed in any other location that enables systems 118 to communicate with each other and with the utility company. Moreover, while computers 118 are described herein as having separate functions, inputs, and/or outputs, it should be recognized that any computer 118 may include the functionality of any other computer 118, and/or may be combined with any other computer 118.

Demand response system 114, in the example embodiment, generates, receives, and/or stores information relating to critical peak events and/or critical peak pricing events that may be identified and/or received by the utility company. As used herein, the terms "critical peak" and "critical peak events" refer to periods of time and/or events that may occur within a power distribution network or grid where a shortage of power generation and/or power transmission capacity occurs (i.e., where demand for power exceeds the utility company's ability to supply the demanded power to each utility customer). As used herein, the term "critical peak pricing event" refers to a period of time where a price or rate for energy supplied to a customer is changed, such as increased, as a result of a critical peak event.

In the example embodiment, demand response system 114 determines when a critical peak pricing event will be initiated, and transmits a notification of the critical peak pricing event to the customers and/or to agents of the customers who will be affected by the event, such as those customers who are enrolled in a load control billing plan that includes critical peak pricing. The critical peak pricing event notification includes, in the example embodiment, a start time for the critical peak pricing event, a duration and/or an end time for the critical peak pricing event, and a price and/or a price adjustment for energy consumed during the critical peak pricing event. Demand response system 114 causes the critical peak pricing event notifications to be transmitted to the customers and/or to agents of the customers, and stores the data contained in the notifications in one or more log files and/or other files. Moreover, in the example embodiment, demand response system 114 transmits a critical peak pricing signal to billing system 122 and/or to any other computer 118. The critical peak pricing signal is representative of the price and/or the price adjustment for energy consumed by energy consumer 106 during the critical peak pricing event.

In the example embodiment, demand response system 114 also transmits requests to AMI meters 108 that cause AMI meters 108 to measure energy consumption by energy consumers 106. Such requests, in the example embodiment, are transmitted through meter monitoring system 110 and through AMI system 112 to AMI meters 108. Moreover, in the example embodiment, at least some requests are transmitted on-demand (i.e., not on a predefined schedule), and are timed such that AMI meters 108 measure the energy consumption of energy consumers 106 at the beginning of the critical peak pricing event and at the end of the critical peak pricing event. In an alternative embodiment, demand response system 114 may transmit the requests at the beginning and end of the critical peak pricing events and at the beginning and end of the billing period, and/or at any other time, frequency, or schedule.

In the example embodiment, demand response system 114 also initiates load control events. As used herein, the term "load control event" refers to a message and/or a signal transmitted from a system to an energy consumer 106, network device 104, and/or AMI meter 108 for use in reducing and/or halting energy consumption by energy consumer 106. As such, demand response system 114 may cause energy consumers 106 to be de-energized when energy demand exceeds energy production and/or energy transmission capacity. Moreover, in one embodiment, load control events may be synchronized with critical peak pricing events such that a load control event is substantially concurrent with a critical peak pricing event.

Customer information system 120, in the example embodiment, is coupled to at least one other computer 118 via system bus 116. In the example embodiment, customer information system 120 includes a database (not shown) and/or any other data structure that stores information relating to utility customers. The information includes, but is not limited to only including, the customer name, the residential address, email address, billing address, and/or any other contact information for the customer, the billing plan that the customer is subscribed to, and/or any other information that enables system 100 to function as described herein. In the example embodiment, a subset of the customers listed within customer information system 120 are subscribed to a billing plan that authorizes the utility company to transmit load control requests to energy consumer 106 and/or another device associated with energy consumer 106 to reduce energy consumed (hereinafter referred to as a "load control billing plan"). Alternatively, any number of customers are subscribed to the load control billing plan, and/or any other billing plan that enables system 100 to function as described herein. As used herein, the term "load control request" refers to data and/or signals transmitted from a utility computer or system to an energy consumer 106 and/or a device associated with energy consumer 106 to cause energy consumer to undertake a desired action and/or to cause a reduction in the energy supplied and/or consumed by energy consumer 106.

In the example embodiment, billing system 122 stores pricing rates and other terms and conditions for each customer's billing plan, such as for the load control billing plan. Alternatively, the pricing rates and/or other terms of the billing plan may be stored in customer information system 120, and signals representative of the pricing rates and/or the other billing plan terms may be transmitted to billing system 122. Moreover, in the example embodiment, billing system 122 receives at least one pricing signal or pricing data from demand response system 114, such as a pricing signal or pricing data representative of a price of electricity consumed by each customer during a critical peak pricing event (hereinafter referred to as a "critical peak pricing signal"). Alternatively, billing system 122 receives a pricing signal or pricing data representative of a price adjustment that changes the price of electricity consumed by each customer during the critical peak pricing event. In the example embodiment, billing system 122 also receives energy consumption measurements from meter monitoring system 110. The measurements include the amount of energy consumed during each critical peak pricing event within a billing cycle or period and the amount of energy consumed other than during the critical peak pricing events (i.e., during the time periods before and/or after the critical peak pricing events have occurred). Based on the inputs received, billing system 122 generates a utility bill for each customer. Billing system 122 transmits the bill, or causes the bill to be transmitted, to each customer and/or to an agent of each customer. In one embodiment, billing system 122 transmits data representative of the bill to a communication system (not shown) that transmits the data to each customer via mail, via email, via a public switched telephone network (not shown), via a webpage, and/or via any other communication medium that enables system 100 to function as described herein.

Moreover, in the example embodiment, a supervisory control and data acquisition (SCADA) system 124 is coupled to system bus 116. In the example embodiment, SCADA system 124 is or includes a computer 118. SCADA system 124 controls an operation of a plurality of power distribution components (not shown) that may include, but are not limited to only including, at least one substation, feeder, transformer, and/or any other component that enables SCADA system 124 to function as described herein. SCADA system 124 is coupled to a plurality of sensors 126, such as current sensors, voltage sensors, and/or any other sensor, that measure operating characteristics of the power distribution components and/or operating characteristics of the power distribution network. Moreover, SCADA system 124 is coupled to a plurality of control devices 128, such as circuit breakers, voltage regulators, capacitor banks, and/or any other device that enables SCADA system 124 to control and/or adjust the operational characteristics of the power distribution network and/or the power distribution components. In the example embodiment, SCADA system 124 is enabled to communicate with sensors 126 and control devices 128 to control the power distribution components using closed loop feedback.

In the example embodiment, SCADA system 124 includes a software-based model or representation of the power distribution network (hereinafter referred to as a "network model") stored within a memory device (not shown). Alternatively, the network model is stored within any other computer 118 that enables system 100 to function as described herein, such as, without limitation, within demand response system 114 and/or customer information system 120. In the example embodiment, the network model enables SCADA system 124 to identify the topology and/or the interconnections of the power distribution components for use in controlling and/or monitoring the components.

During operation, in the example embodiment, AMI meters 108 for each customer and/or location 102 transmit energy consumption measurements for each customer at the beginning of the billing period. If a shortage of power transmission and/or power generation capability occurs or is anticipated to occur, demand response system 114 prepares to issue a critical peak pricing event and identifies a subset of customers that are subscribed to the load control billing plan. The subset of customers may be identified using data from customer information system 120 and/or any other computer 118, including demand response system 114, that enables system 100 to function as described herein. Demand response system 114 identifies a start time, a duration and/or an end time, and a price and/or price adjustment for the critical peak pricing event. Demand response system 114 causes a notification of the critical peak pricing event to be transmitted to each agent and/or customer of the subset of customers. Each AMI meter 108 associated with each customer of the subset of customers transmits at least one energy consumption measurement at the start of the critical peak pricing event (i.e., once the start time is reached) and at the end of the critical peak pricing event (i.e., once the end time is reached or the duration has elapsed) to meter monitoring system 110. In the example embodiment, demand response system 114 transmits one or more measurement requests to AMI meters 108 at the start time and at the end time of the critical peak pricing event, and AMI meters transmit the respective energy consumption measurements to meter monitoring system 110 in response to the requests. Alternatively, AMI meters 108 receive the critical peak pricing event notifications and are programmed by the notifications to automatically transmit the energy consumption measurements to meter monitoring system 110 once the start time and/or the end time is reached.

Meter monitoring system 110, in the example embodiment, receives the energy consumption measurements and transmits the energy consumption measurements to billing system 122. Demand response system 114 transmits a critical peak pricing signal to billing system 122 to enable billing system 122 to determine the price for energy consumed during the critical peak pricing event. Moreover, in the example embodiment, billing system 122 references data stored within billing system 122 to determine a price (hereinafter referred to as a "standard pricing rate") for energy consumed during a standard rate period (i.e., during a time period other than the critical peak pricing event). Billing system 122 generates a bill for the energy consumed during the billing period using a billing algorithm (not shown in Fig. 1) stored within billing system 122. In the example embodiment, billing system 122 transmits the bill to the customer and/or causes the bill to be transmitted to the customer and/or to the agent of the customer.

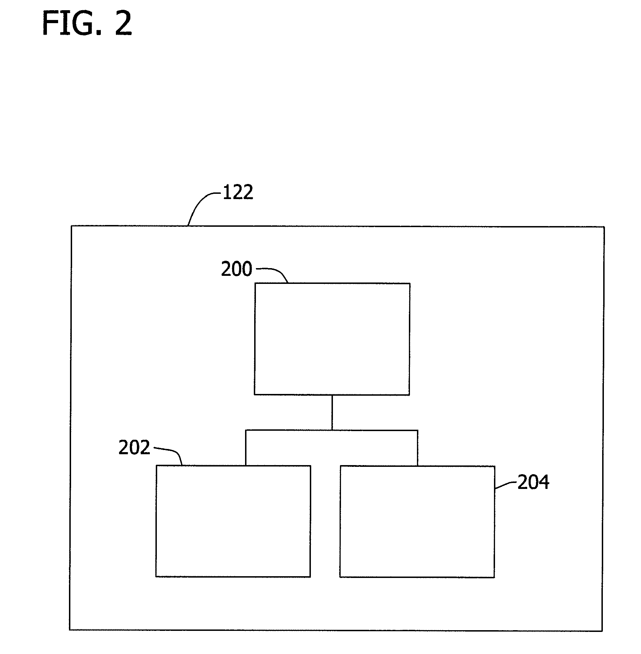

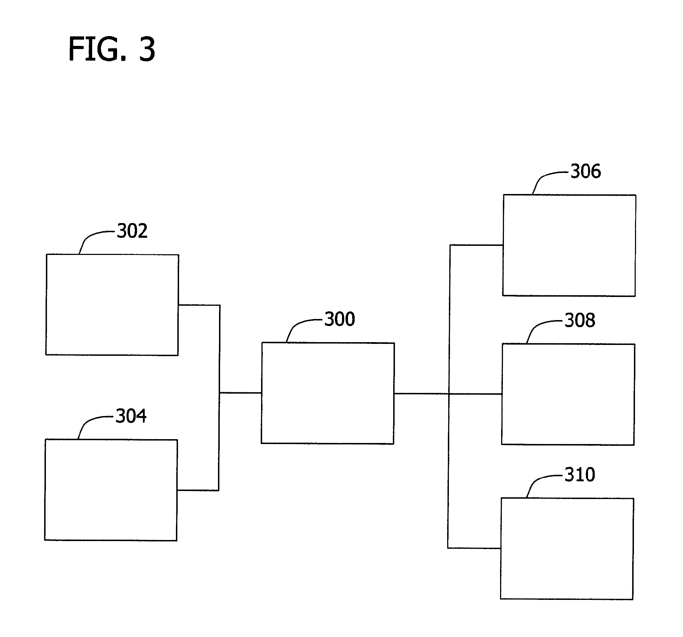

Fig. 2 is a block diagram of an example billing system 122 that may be used with system 100 (shown in Fig. 1). Fig. 3 is a block diagram of an example billing algorithm 300 that may be used with billing system 122.

In the example embodiment, billing system 122 includes a processor 200, a network interface 202, and a memory device 204 that are coupled together. Processor 200 controls the operation of billing system 122 and generates a bill for an energy consumer 106 (shown in Fig. 1), as described more fully herein. Network interface 202, in the example embodiment, is coupled to system bus 116 for receiving data from computers 118, such as from demand response system 114 and from meter monitoring system 110 (each shown in Fig. 1). Moreover, network interface 202 transmits data, such as data representative of a bill, to one or more computers 118 and/or to any other system that enables system 100 to function as described herein. In the example embodiment, network interface 202 includes a network adapter (not shown). Alternatively, network interface 202 includes any other device that enables billing system 122 to communicate with computers 118 via system bus 116. In the example embodiment, memory device 204 is a computer-readable medium, such as random access memory (RAM). Alternatively, memory device 204 is any other computer-readable medium that enables data and/or instructions to be stored within memory device 204 for execution and/or other use by processor 200.

Billing algorithm 300, in the example embodiment, is stored within memory device 204 and is executed by processor 200. Billing algorithm 300 receives at least one pricing input 302 from demand response system 114 (shown in Fig. 1) and at least one meter data input 304 from meter monitoring system 110 (shown in Fig. 1). Alternatively, pricing input 302 and/or meter data input 304 may be received from any other system or device that enables billing algorithm 300 to function as described herein. Pricing input 302, in the example embodiment, includes a pricing signal and/or a pricing adjustment signal, such as a critical peak pricing signal, for use in determining a pricing rate for energy consumed during a critical peak pricing event (hereinafter referred to as the "critical peak pricing rate"). Moreover, in the example embodiment, meter data input 304 includes energy consumption measurements representative of energy consumed during the critical peak pricing event, and energy consumption measurements representative of energy consumed other than during the critical peak pricing event, such as before and/or after the critical peak pricing event. Alternatively or additionally, pricing input 302 and/or meter data input 304 may include any other data that enables billing algorithm 300 to function as described herein.

Moreover, in the example embodiment, billing algorithm 300 generates a bill 306 representative of a cost of energy consumed by each energy consumer 106 during the billing period. In the example embodiment, billing system 122 generates an alternative bill 308 for each energy consumer 106 during the billing period. Alternative bill 308 represents an estimated cost for the energy consumed by energy consumer 106 if the utility customer subscribed to an alternative billing plan, rather than the load control billing plan. In the example embodiment, the load control billing plan includes a discounted pricing rate as compared to the pricing rate of the alternative billing plan. Accordingly, billing system 122 generates a report 310 that indicates a cost savings that the utility customer realizes by subscribing to the load control billing plan. Alternatively, if alternative bill 308 is lower than bill 306 (i.e., the cost of energy consumed under the alternative billing plan is lower than the cost of energy consumed under the load control billing plan), report 310 indicates the additional cost for the energy consumed under the load control billing plan as compared to the alternative billing plan. In such a situation, billing system 122 may cause alternative bill 308 to be transmitted to the customer instead of bill 306, thus ensuring that the customer always receives the bill with the lowest cost for the energy consumed. As such, the utility customer may be encouraged to subscribe to the load control billing plan, rather than subscribing to an alternative billing plan. In one embodiment, report 310 is incorporated within bill 306 and/or alternative bill 308.

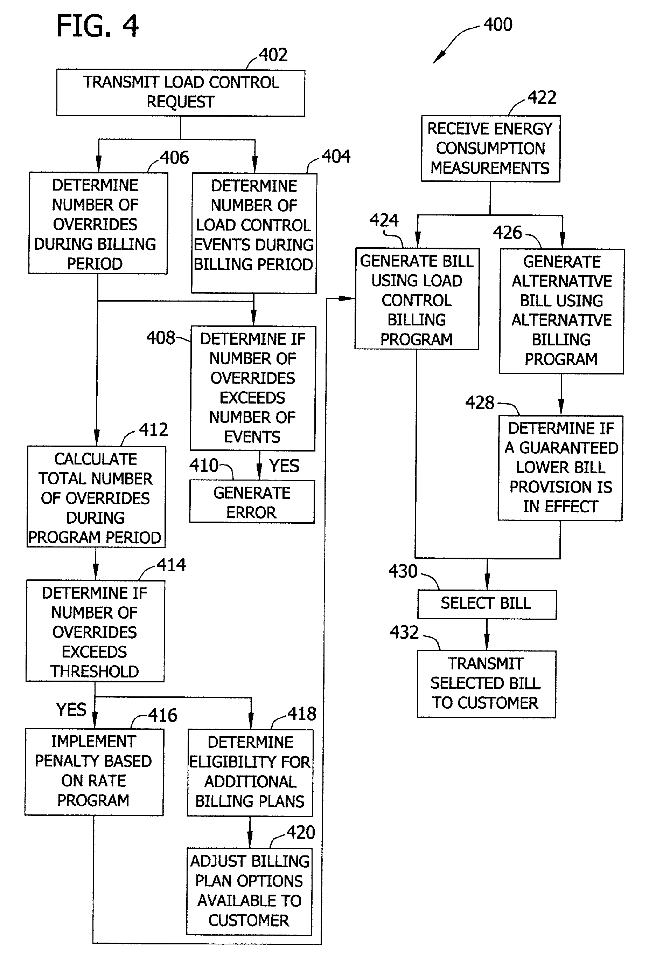

Fig. 4 is a flow diagram of an example method 400 of generating a bill that may be used with system 100, billing system 122, and/or customer information system 120 (all shown in Fig. 1). In the example embodiment, method 400 is at least partially embodied within a plurality of instructions stored within memory device 204 (shown in Fig. 2) and is at least partially executed by billing system 122. Additionally or alternatively, method 400 may be at least partially embodied within a plurality of instructions stored within any other memory device, and/or may be at least partially executed by any other computer 118 such as demand response system 114, meter monitoring system 110 (all shown in Fig. 1), and/or any other system that enables method 400 to function as described herein. Moreover, in the example embodiment, method 400 generates a bill for a customer subscribed to a load control billing plan.

As used herein, a "load control billing plan" is a billing plan that authorizes a utility company to at least partially exert control over at least one energy consumer 106 within a location 102 associated with the customer (both shown in Fig. 1). As such, the utility company may transmit load control requests to energy consumer 106, network device 104, and/or to the customer for use in reducing energy consumed by energy consumer 106. In return for implementing such load control requests, the utility company may incorporate a rate reduction within the load control billing plan.

In the example embodiment, demand response system 114 generates at least one load control event during a billing period. Each load control event, in the example embodiment, includes at least one load control request transmitted 402 from demand response system 114 to an energy consumer 106 (shown in Fig. 1), to network device 104, and/or to any other device associated with energy consumer 106 and/or associated with the utility customer responsible for paying the energy consumption costs of energy consumer 106. The customer or another person who receives the load control request may override the request (hereinafter referred to as an "event override") by manipulating a user interface (not shown) of network device 104 and/or by any other device or mechanism. A notification of the event override is transmitted to the utility company. If the load control request is overridden (i.e., if the utility company receives a notification of an event override), the utility company may not reduce the energy supplied to energy consumer 106. If, however, the load control request is accepted and/or is not overridden, the utility company may reduce energy supplied to energy consumer 106.

In response to the transmission 402 of a load control request, method 400 is executed. In the example embodiment, the number of load control events that have occurred during the billing period is determined 404. Moreover, the number of event overrides initiated by the customer during the billing period is determined 406. As part of an error-checking routine, if method 400 determines 408 that the number of event overrides exceeds the number of load control events, an error may be generated 410.

Moreover, the number of event overrides that have occurred during a billing plan is determined 412. More specifically, in the example embodiment, customer information system 120 and/or any other computer 118 receives a notification of each event override that has occurred, and/or a notification of the number of event overrides that have occurred throughout the duration of the customer's billing plan. Alternatively, the number of event overrides are accumulated throughout any other period within the duration of the customer's billing plan. Method 400 determines 414 if the number of event overrides exceeds a predetermined event override threshold that is representative of a number of allowable event overrides during the billing plan duration. If the number of event overrides does not exceed the event override threshold, method 400 returns to transmitting 402 a load control request when a subsequent load control event is scheduled to occur.

If the number of event overrides exceeds the event override threshold, a penalty is implemented 416 or imposed upon the customer based on the terms of the billing plan. In the example embodiment, the penalty includes increasing a cost of energy supplied to the customer. More specifically, an increased pricing rate may be charged for energy consumed by energy consumer 106 and/or an additional cost may be added to the customer's bill. Additionally or alternatively, the penalty may include switching the customer from a first billing plan to a second billing plan. For example, in one embodiment, the customer may be switched to a load control billing plan and/or another billing plan that does not include a rate discount for load control. Alternatively, the customer may be switched to any other billing plan that enables method 400 to function as described herein. Moreover, the additional cost added to the customer's bill may be a fixed monetary amount, may be a fixed monetary amount for each event override received that exceeds the event override threshold, and/or may be a cost or monetary amount that progressively increases for each event override received that exceeds the event override threshold. Alternatively, any other penalty may be implemented 416 that enables method 400 to function as described herein. Moreover, in the example embodiment, method 400 determines 418 the customer's eligibility for additional billing plans based on the customer's event override history. More specifically, if the customer has initiated more event overrides than are allowed under one or more additional billing plans, the billing plan options available to the customer are adjusted 420 to remove billing plans for which the customer is ineligible.

In the example embodiment, at least one energy consumption measurement representative of energy consumed during the billing period is received 422 from meter monitoring system 110 and/or from any other system. A bill, such as bill 306 (shown in Fig. 3), is generated 424 from the energy consumption measurements using the rate structure from the load control billing plan. Moreover, bill 306 may include the penalty implemented 416 if the number of event overrides exceeds the event override threshold, as described more fully above. In the example embodiment, an alternative bill, such as alternative bill 308 (shown in Fig. 3), is generated 426 from the energy consumption measurements using a rate structure from an alternative billing plan. Moreover, alternative bill 308 may include the penalty implemented 416 if the number of event overrides exceeds the event override threshold. In the example embodiment, the load control billing plan includes a rate structure that is reduced compared to a rate structure of the alternative billing plan.

In one embodiment, customer information system 120 implements 416 the penalty and transmits a signal representative of the penalty to billing system 122, thus causing billing system 122 to generate 424 a bill 306 and/or an alternative bill 308 that includes the penalty based on the number of event overrides received. Alternatively, any other computer 118 may implement 416 the penalty and/or cause billing system 122 to generate 424 a bill 306 and/or an alternative bill 308 that includes the penalty.

Moreover, in the example embodiment, method 400 determines 428 whether a provision that guarantees the customer will receive the lower of bill 306 and alternative bill 308 (hereinafter referred to as a "guaranteed lower bill provision") is in effect, i.e., whether the customer's billing plan includes a guaranteed lower bill provision. If the guaranteed lower bill provision is in effect, the lower of bill 306 and alternative bill 308 is selected 430 and is transmitted 432 to the customer. If the guaranteed lower bill provision is not in effect, bill 306 is selected 430 and is transmitted 432 to the customer for payment.

The example system described herein generates a bill for energy consumed during a billing period. A meter associated with an energy consumer measures energy consumed during the billing period. A load control event may be initiated such that a load control request is transmitted to a device associated with a customer. If the customer overrides the load control request, a total number of overrides received during the billing period and/or during the billing plan is determined. If the number of overrides exceeds an override threshold, a penalty is assessed to the customer. A bill is determined based on the measured energy consumption during the billing period, and the penalty may be included in the bill. Accordingly, a utility customer may retain the flexibility to override load control requests during peak energy usage periods, and a utility company may recover costs associated with load control requests that are overridden by the customers.

A technical advantage of the systems and method described herein includes at least one of (a) receiving a measurement representative of energy consumed by an energy consumer; (b) transmitting a load control request to a device associated with an energy consumer; (c) receiving a notification from a device, the notification representative of an override of a load control request; and (d) generating a bill for energy consumed based on a measurement and a notification received.

Example embodiments of systems and methods for use in generating a bill are described above in detail. The systems and methods are not limited to the specific embodiments described herein, but rather, components of the systems and/or steps of the methods may be utilized independently and separately from other components and/or steps described herein. For example, the system described herein may also be used in combination with other energy systems and methods, and is not limited to practice with only the utility company as described herein. Rather, the example embodiment can be implemented and utilized in connection with many other utility and/or energy applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defmed by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system (100), comprising:
a first computer (118) configured to transmit a load control request to a device (104) associated with an energy consumer (106); and
a second computer configured to:
receive a notification representative of an override of the load control request; and
determine a penalty to be imposed upon the customer based on the notification received.

2. A system (100) in accordance with claim 1, wherein the penalty to be imposed upon the customer includes an increased pricing rate for energy consumed by the energy consumer (106).

3. A system (100) in accordance with claim 1 or claim 2, wherein the penalty to be imposed upon the customer includes switching the customer from a first billing plan to a second billing plan.

4. A system (100) in accordance with claim 1, 2 or 3, wherein the penalty to be imposed upon the customer includes a predetermined additional cost to be added to a bill (306).

5. A system (100) in accordance with any one of claims 1 to 4, wherein the penalty to be imposed upon the customer includes an additional cost to be added to a bill (306), wherein the additional cost increases for each notification received that exceeds a predetermined threshold.

6. A system (100) in accordance with any one of claims 1 to 5, wherein said second computer (118) compares a number of notifications received from the device (104) to a predetermined threshold to determine whether to impose the penalty upon the customer.

7. A system (100) in accordance with any one of claims 1 to 6, wherein said second computer (118) determines a list of billing plans that the customer is eligible for based on a number of notifications received.

8. A system (100), comprising:
a meter (108) for monitoring energy consumed by an energy consumer (106);
at least one computer (118) configured to:
transmit a load control request to a device (104) associated with the energy consumer (106);
receive a notification representative of an override of the load control request; and
cause a bill (306) to be generated for the energy consumed at least partially based on the notification received.

9. A system (100) in accordance with claim 8, wherein said at least one computer (118) determines a penalty to be imposed upon the customer based on the notification received.

10. A system (100) in accordance with claim 9, wherein the penalty to be imposed upon the customer includes an increased pricing rate for energy consumed by the energy consumer (106).

11. A system in accordance with claim 9 or claim 10, wherein the penalty to be imposed upon the customer includes switching the customer from a first billing plan to a second billing plan.

12. A system in accordance with claim 9, 10 or 11, wherein the penalty to be imposed upon the customer includes a predetermined additional cost to be added to the bill.

13. A system in accordance with any one of claims 9 to 12, wherein the penalty to be imposed upon the customer includes an additional cost to be added to the bill, wherein the additional cost increases for each notification received that exceeds a predetermined threshold.

14. A system in accordance with any one of claims 9 to 13, wherein said at least one computer (118) compares a number of notifications received from the device (104) to a predetermined threshold to determine whether to impose the penalty upon the customer.

15. A method for generating a bill, said method comprising:
receiving a measurement representative of energy consumed by an energy consumer (106);
transmitting a load control request to a device (104) associated with the energy consumer (106);
receiving a notification representative of an override of the load control request; and
generating a bill (306) for energy consumed based on the measurement and the notification received.
